# EUROPÄISCHE PATENTSCHRIFT

(11) **EP 2 867 030 B1**
(45) Veröffentlichungstag und Bekanntmachung des Hinweises auf die Patenterteilung: **24.08.2016**
(21) Anmeldenummer: 12735768.9
(22) Anmeldetag: 02.07.2012
(51) Int. Cl.: B42D 15/00, G02B 26/02, G02F 1/167, G02F 1/17, G09F 9/37

(54) **SICHERHEITSELEMENT, VERFAHREN ZUR HERSTELLUNG EINES SOLCHEN SICHERHEITSELEMENTS UND VERFAHREN ZUR PRÜFUNG DER ECHTHEIT EINES SICHERHEITSDOKUMENTS MIT EINEM SOLCHEN SICHERHEITSELEMENT**
SECURITY ELEMENT, METHOD FOR PRODUCING SUCH A SECURITY ELEMENT, AND METHOD FOR CHECKING THE AUTHENTICITY OF A SECURITY DOCUMENT WITH SUCH A SECURITY ELEMENT
ELÉMENT DE SÉCURITÉ, PROCÉDÉ DE FABRICATION D'UN TEL ÉLÉMENT DE SÉCURITÉ, ET PROCÉDÉ DE VÉRIFICATION DE L'AUTHENTICITÉ D'UN DOCUMENT DE SÉCURITÉ POURVU D'UN TEL ÉLÉMENT DE SÉCURITÉ

(43) Veröffentlichungstag der Anmeldung: 06.05.2015
(73) Patentinhaber: Orell Füssli Sicherheitsdruck AG, 8003 Zürich (CH)
(72) Erfinder: EICHENBERGER, Martin, CH-8702 Zollikon (CH); SAUTER, Dieter, CH-8004 Zürich (CH)
(74) Vertreter: Engelbrecht, Christoph
(86) Internationale Anmeldenummer: PCT/CH2012/000150
(87) Internationale Veröffentlichungsnummer: WO 2014/005233

(56) Entgegenhaltungen:
- WO-A2-03/089250
- DE-A1-102009 023 982

## Beschreibung

### Gebiet der Erfindung

Die Erfindung betrifft ein Sicherheitselement für ein Sicherheitsdokument, ein Sicherheitsdokument mit einem solchen Sicherheitselement, ein Verfahren zur Herstellung eines solchen Sicherheitselements und ein Verfahren zur Prüfung der Echtheit eines Sicherheitsdokuments mit einem solchen Sicherheitselement gemäss Oberbegriff der unabhängigen Ansprüche. Die Erfindung ist besonders für den Einsatz bei Banknoten geeignet.

### Hintergrund

Sicherheitselemente werden typischerweise auf Sicherheitsdokumenten wie beispielsweise Banknoten, Ausweisen, Urkunden, Schecks, Kreditkarten und ähnlichem angebracht, um das Sicherheitsdokument gegen Fälschungen und/oder Verfälschungen zu sichern. Typische Sicherheitselemente sind zum Beispiel Wasserzeichen, Perforationen, Sicherheitsfäden, Hologramme und so weiter, welche schwer zu reproduzieren sind. In der Regel werden Sicherheitsdokumente mit einer Vielzahl von Sicherheitselementen versehen, die teilweise mit blossem Auge, teilweise erst mittels einer externen Prüfvorrichtung detektiert werden können z.B. durch Betrachten mit Auflicht, Durchlicht oder ultraviolettem Licht.

Aus der internationalen Patentanmeldung WO 03/089250 A2 ist es bekannt, ein Sicherheitselement vorzusehen, welches zumindest teilweise aus einem Material mit einer Vielzahl von in Mikrokapseln beweglich eingeschlossenen Teilchen besteht, die mittels eines elektrischen oder eines magnetischen Feldes in ihrer Lage und/oder Ausrichtung veränderbar sind und dadurch das optische Erscheinungsbild des Sicherheitselements verändern können. Die Teilchen bestehen aus mindestens zwei Teilen, die verschieden gefärbt sind und gleichzeitig verschiedene elektrische bzw. magnetische Eigenschaften besitzen. So können sie beispielsweise mit verschiedenen leitfähigen Druckfarben unter Formung einer strukturierten Schicht bedruckt sein. Ein angelegtes elektrisches bzw. magnetisches Feld sorgt dann dafür, dass die Teilchen sich ausrichten und das Sicherheitselement in einer bestimmten Färbung sichtbar ist. Ändert man die Feldrichtung, so kippen die Teilchen und die sichtbare Färbung ändert sich. Die Teilchen können auch in Form eines Pulvers vorliegen, wobei zwei verschiedene Sorten von Pulver-Teilchen verwendet werden, die unterschiedliche Farben und unterschiedliche elektrische Ladungen aufweisen. Die einzelnen Teilchen können auch als Pigmente einer Druckfarbe, Tinte oder einem anderen Färbungsmittel verwendet werden. Dieses Dokument offenbart den Oberbegriff von Anspruch 1.

Aus der Offenlegungsschrift DE 10 2009 023 982 A1 ist ferner ein Sicherheitselement mit einem durch ein externes Magnetfeld veränderbaren visuellen Eindruck bekannt, das eine Vielzahl von Kern-Hülle-Teilchen enthält. Der Kern eines Kern-Hülle-Teilchens enthält ein magnetisches Fluid und eine visuell von dem magnetischen Fluid unterscheidbare, insbesondere feste, nicht-magnetische Phase, die innerhalb des Fluids beweglich ist. Zusätzlich kann der Kern magnetische Teilchen enthalten, die sich visuell von dem magnetischen Fluid und der nicht-magnetischen Phase unterscheiden. Wird das Sicherheitselement einem magnetischen Feld ausgesetzt, so bewegen sich das magnetische Fluid und die magnetischen Teilchen entsprechend der Polarität des Feldes, was zu einer Verdrängung der nicht-magnetischen Phase und somit zu einer Farbänderung des Sicherheitselements führt. Diese Farbänderung wird für Verifikationszwecke eingesetzt.

### Darstellung der Erfindung

Es ist Aufgabe der Erfindung, ein alternatives, durch ein elektrisches oder magnetisches Feld optisch veränderbares Sicherheitselement für ein Sicherheitsdokument bereitzustellen, welches insbesondere einfach herstellbar ist. Es ist ferner Aufgabe der Erfindung ein Sicherheitsdokument mit einem solchen Sicherheitselement, ein Verfahren zur Herstellung eines solchen Sicherheitselements und ein Verfahren zur Prüfung der Echtheit eines Sicherheitsdokuments mit einem solchen Sicherheitselement bereitzustellen.

Diese Aufgaben werden durch ein Sicherheitselement, ein Sicherheitsdokument, ein Verfahren zur Herstellung eines solchen Sicherheitselements und ein Verfahren zur Prüfung der Echtheit eines Sicherheitsdokuments mit einem solchen Sicherheitselement mit den Merkmalen der unabhängigen Ansprüche gelöst.

Das erfindungsgemässe Sicherheitselement umfasst eine Vielzahl von Partikeln, die jeweils beweglich, z.B. um drei orthogonale Achsen drehbar, in einer Vielzahl von Verkapselungen im Sicherheitselement eingebracht sind. Dabei ist vorzugsweise ein Partikel pro Verkapselung untergebracht, allenfalls auch mehrere Partikel pro Verkapselung. Jeweils eine erste und eine zweite Seite eines Partikels sind magnetisch und/oder elektrisch unterschiedlich polarisiert, wobei die erste oder die zweite oder eine weitere Seite des Partikels mit einer ersten Beschichtung versehen ist. Durch die Anordnung der Beschichtung ist insbesondere eine vereinfachte Herstellung des Sicherheitsmerkmals ermöglicht und es ergeben sich eine Vielzahl an unterschiedlichen Möglichkeiten, an welcher Position das Partikel mit der Beschichtung versehen ist.

Die erste Beschichtung ist dabei vorzugsweise nicht-magnetisch bzw. nicht elektrisch leitend.

Die Partikel mit den jeweils zwei unterschiedlich magnetisch und/oder elektrisch polarisierten ersten und zweiten Seiten werden im Folgenden auch magnetisch bzw. elektrisch polarisierte Partikel genannt. Somit ist durch Anlegen eines elektrischen und/oder magnetischen Feldes eine Bewegung bzw. Ausrichtung der Partikel möglich und damit gleichzeitig eine Bewegung bzw. Ausrichtung der Beschichtung.

Bei den verwendeten Verkapselungen handelt es sich vorzugsweise um Mikroverkapselungen, d.h. um Umhüllungen von sehr kleinen Mengen von Partikeln (z.B. 1 Partikel pro Verkapselung) mittels einer Hülle bzw. Kapsel (vgl. http://de.wikipedia.org/wiki/Mikroverkapselung, abgerufen am 22. Mai 2012). Insbesondere betragen die Mikroverkapselungsdurchmesser (d.h. Durchmesser der Kapseln) dabei weniger als 25 µm. Besonders bevorzugte Durchmesser liegen im Bereich von 15 µm bis 25 µm. Somit wird eine einfachere Handhabung (z.B. in Siebdruckverfahren) sowie eine grosse Kapselanzahl pro Flächeneinheit (und damit z.B. gute Druckauflösung) ermöglicht.

Die Verkapselungen bzw. die die Verkapselungen bildenden Kapseln sind vorzugsweise mindestens für eine optische Wellenlänge transparent ausgestaltet (Transmission für diese Wellenlänge über 60%). Insbesondere können die Verkapselungen auch für einen Wellenlängenbereich, z.B. den sichtbaren optischen Wellenlängenbereich, transparent ausgestaltet sein. Somit wird eine einfachere Prüfung des Sicherheitsmerkmals ermöglicht.

In der Verkapselung bzw. Kapsel ist ein gasförmiges oder flüssiges, vorzugsweise nicht-magnetisches bzw. nicht elektrisch leitendes Medium vorgesehen, in welchem die magnetisch und/oder elektrisch polarisierten Partikel frei beweglich sind. Als gasförmiges Medium kann beispielsweise Luft, als flüssiges Medium beispielsweise Öl eingesetzt werden. In einer besonders bevorzugten Ausführungsform entspricht eine Dichte des Mediums in der Verkapselung ungefähr (d.h., relative Abweichung < ±50%) einer Dichte des oder der Partikel in der Verkapselung. Somit wird eine Entmischung des Verkapselungsinhalts z.B. durch ein Absetzen der Partikel in der Verkapselung erschwert oder verhindert.

In einer bevorzugten Ausführungsform weist die erste Beschichtung mindestens eine der folgenden optischen Eigenschaften auf:
- Farbe, d.h. stärkere Absorption einer optischen Wellenlänge oder eines optischen Wellenlängenbereichs als einer anderen optischen Wellenlänge bzw. eines anderen optischen Wellenlängenbereichs,
- Reflektivität ("Spiegelung") einer optischen Wellenlänge oder eines optischen Wellenlängenbereichs,
- Fluoreszenz und
- Phosphoreszenz.

Bei der optischen Eigenschaft "Farbe" kann es sich z.B. auch um eine Mischfarbe handeln, so dass sämtliche Farben insbesondere des RAL-Farbsystems erhalten werden können. Jedes Partikel kann zusätzlich selbst mindestens eine von der Beschichtung unterschiedliche optische Eigenschaft aufweisen, d.h. z.B. eine eigene Farbe.

Allgemein bezieht sich der Begriff "optische Eigenschaft" eines Objekts im Kontext dieser Beschreibung auf eine nachweisbare Wechselwirkung des Objekts mit auf das Objekt eingestrahltem Licht, d.h., eine Veränderung der Wellenlänge und/oder des Wellenvektors von eingestrahlten Lichtwellen, welche nach Wechselwirkung mit dem Objekt beobachtet werden kann.

Gemäss bevorzugter Ausgestaltung ist zumindest ein Teil der Partikel als Plättchen ausgestaltet. Das heisst, die Partikel sind flach (d.h. sie besitzen zwei gegenüberliegende Seitenflächen) und sind senkrecht zu diesen Seitenflächen überall ungefähr gleich dick (Abweichung < ±20% gegenüber einer durchschnittlichen Dicke). Die Seitenflächen auf den zwei gegenüberliegenden Seiten besitzen je eine im Verhältnis zur Dicke sehr ausgedehnte Fläche (vgl. Duden - Deutsches Universalwörterbuch, 5. Auflage, Dudenverlag, Mannheim). Die erste Beschichtung ist bevorzugt auf einer als ausgedehnte Fläche ausgebildeten Seite aufgebracht. Die magnetisch und/oder elektrisch unterschiedlich polarisierten Seiten eines Plättchens können den gegenüberliegenden, als ausgedehnte Flächen ausgebildeten Seiten entsprechen. Alternativ können sie denjenigen gegenüberliegenden Seiten eines jeden Plättchens entsprechen, welche senkrecht zu den als ausgedehnte Flächen ausgebildeten Seiten angeordnet sind, d.h. die die als ausgedehnte Flächen ausgebildete Seiten miteinander verbinden. Es sei an dieser Stelle darauf hingewiesen, dass neben plättchenförmigen Partikeln auch andere Partikelformen möglich sind, beispielsweise Würfel, Zylinder, (Doppel-)Kegel, Quader, (Doppel-)Pyramiden etc.

Erfindungsgemäss sind wenigstens zwei Gruppen von verkapselten Partikeln vorgesehen, wobei bei der ersten Gruppe von verkapselten Partikeln die erste Beschichtung in Bezug auf die magnetisch und/oder elektrisch unterschiedlich polarisierten Seiten gegenüberliegend der ersten Beschichtung der zweiten Gruppe von verkapselten Partikeln angeordnet ist. Beispielsweise ist bei der ersten Gruppe die erste Beschichtung an einer elektrisch positiv polarisierten ersten Seite angeordnet und bei der zweiten Gruppe ist die erste Beschichtung an einer elektrisch negativ polarisierten zweiten Seite angeordnet. Somit können die Beschichtungen der beiden Gruppen durch Anlegen eines Magnetfeldes bzw. elektrischen Feldes unterschiedlich ausgerichtet werden, was eine Echtheitsprüfung des Sicherheitsmerkmals vereinfacht. Mit anderen Worten lassen sich mittels eines elektrischen Feldes bzw. Magnetfeldes bei Echtheit vordefinierte Muster erzeugen.

Grundsätzlich kann bei jedem Partikel auf der zweiten Seite, welche der mit der ersten Beschichtung versehenen ersten Seite gegenüberliegt, eine zweite nicht-magnetische bzw. nicht elektrisch leitende zweite Beschichtung vorgesehen sein, welche vorzugsweise unterschiedliche optische Eigenschaften aufweist als die erste Beschichtung. Beispielsweise kann die zweite Beschichtung (wie oben für die erste Beschichtung ausgeführt) eine Mischfarbe oder eine andere optische Eigenschaft aufweisen, welche sich allerdings von der Mischfarbe bzw. der optischen Eigenschaft der ersten Beschichtung unterscheidet.

Selbstverständlich können auch weitere Gruppen von verkapselten Partikeln vorgesehen sein, bei denen sich optische Eigenschaften (z.B. Farben) der Beschichtungen oder der Partikel selbst von optischen Eigenschaften derjenigen Beschichtungen oder derjenigen Partikel der im vorletzten Absatz genannten wenigstens zwei Gruppen von Partikeln unterscheiden.

Zusätzlich zu den magnetisch und/oder elektrisch unterschiedlich polarisierten Partikeln können in jeder Verkapselung bzw. Kapsel auch nicht-magnetische bzw. nicht elektrisch polarisierte Partikel vorgesehen sein, welche von den polarisierten Partikeln abweichende optische Eigenschaften (z.B. Farben) aufweisen können. Beispielsweise kann sich die Farbe einer nicht-magnetisch bzw. nicht elektrisch polarisierten Partikelgruppe von der Farbe der ersten Beschichtung und gegebenenfalls von der Farbe der zweiten Beschichtung unterscheiden. Somit bildet die Gruppe der nicht-magnetisch bzw. nicht elektrisch polarisierten Partikel eine "Grundfarbe", wohingegen die Orientierung der ersten und ggf. zweiten Beschichtung(en) durch Anlegen eines elektrischen bzw. magnetischen Feldes beeinflusst werden kann.

Bei einem Sicherheitsdokument mit einem Sicherheitselement gemäss der Erfindung werden dadurch, dass das Sicherheitselement einem magnetischen oder einem elektrischen Feld ausgesetzt wird, die magnetisch und/oder elektrisch unterschiedlich polarisierten Partikel entsprechend des magnetischen bzw. elektrischen Feldes in ihrer Verkapselung ausgerichtet, was zu einer Änderung der Orientierung der ersten und gegebenenfalls der zweiten Beschichtung(en) führt. Diese Orientierungsänderung der Beschichtung(en) hat eine Änderung von optischen Eigenschaften des Sicherheitselements zur Folge, die dazu eingesetzt werden können, die Echtheit des Sicherheitsdokuments zu überprüfen. Handelt es sich um Partikel unterschiedlicher magnetischer Polarität, wird ein homogenes oder inhomogenes magnetisches Feld eingesetzt. Handelt es sich um Partikel unterschiedlicher elektrischer Polarität wird ein homogenes oder inhomogenes elektrisches Feld eingesetzt. Eine Kombination ist ebenfalls möglich. Somit ist eine einfachere Überprüfung der Echtheit des Sicherheitsdokuments gewährleistet.

Da zwei Gruppen von verkapselten, magnetisch und/oder elektrisch unterschiedlich polarisierten Partikeln vorgesehen sind, bei denen bei der einen Gruppe die erste Beschichtung in Bezug auf die magnetisch und/oder elektrisch polarisierten Seiten gegenüber der ersten, vorzugsweise gleichfarbigen, Beschichtung der zweiten Gruppe liegt, lassen sich mittels des elektrischen Feldes bzw. Magnetfeldes bei Echtheit des Sicherheitsdokuments vordefinierte Muster erzeugen. Das Vorsehen von zwei Gruppen erhöht die Fälschungssicherheit des Sicherheitselements und somit des Sicherheitsdokuments. Je mehr Gruppen mit unterschiedlichen optischen Beschichtungen (also Beschichtungen mit unterschiedlichen optischen Eigenschaften, z.B. Farben) vorgesehen sind, desto komplexere Muster können erzeugt werden, was wiederum die Fälschungssicherheit weiter erhöht. Auch durch den Einsatz von nicht-magnetisch bzw. nicht elektrisch polarisierten Partikeln mit abweichenden optischen Eigenschaften in der Verkapselung, die durch die sich bei Anlegen eines magnetischen oder elektrischen Feldes in Richtung auf einen Pol bewegenden bzw. ausrichtenden, magnetisch und/oder elektrisch unterschiedlich polarisierten Partikel verdrängt werden, können zusätzliche optische Effekte (z.B. Farb- und Mustereffekte) erzielt werden und die Fälschungssicherheit kann somit weiter erhöht werden.

Zur Erzeugung eines magnetischen Feldes kann ein Magnet eingesetzt werden, wie er beispielsweise in einem Mobiltelefon eingesetzt werden kann. Ein solcher Magnet ist vorzugsweise relativ schwach, d.h. z.B. im Bereich von 0.0001 bis 0.5 Tesla, insbesondere im Bereich von 0.01 bis 0.1 Tesla. Elektrische Auslesefeldstärken liegen vorzugsweise im Bereich vom 1 bis 1000 V/m. D.h. auch im täglichen Gebrauch können Benutzer des Sicherheitsdokuments, bei dem es sich beispielsweise um eine Banknote handelt, auf einfache Weise dessen Echtheit prüfen. Bei mehreren polarisierten Partikeln in einer Verkapselung kann/können z.B. ein stärkerer Auslesemagnet bzw. ein stärkeres elektrisches Auslesefeld eingesetzt werden als bei einem polarisierten Partikel pro Verkapselung.

Ein weitere Möglichkeit stellt z.B. das "Schalten" eines Barcodes oder QR-Codes dar, welcher z.B. mittels eines Mobiltelefons oder eines anderen geeigneten Lesegeräts ausgelesen werden kann.

Zur Erzeugung eines magnetischen und/oder elektrischen Feldes können auf dem Sicherheitsdokument z.B. elektrisch leitfähige Schichten vorgesehen sein, an die eine Spannungsquelle angeschlossen wird. Eine Richtungsänderung des magnetischen Feldes bzw. des elektrischen Feldes führt zu einer entsprechenden Orientierungs- und/oder Positionsänderung der magnetisch und/oder elektrisch unterschiedlich polarisierten Partikel.

Nach dem erfindungsgemässen Verfahren zur Herstellung eines Sicherheitselements gemäss der Erfindung werden in einem ersten Schritt elektrisch und/oder magnetisch unterschiedlich polarisierte Partikel auf einer ersten Seite mit einer ersten Beschichtung versehen. Gegebenfalls wird zusätzlich zur ersten Beschichtung noch eine zweite Beschichtung mit vorzugsweise unterschiedlichen optischen Eigenschaften (z.B. Farbe) aufgebracht. Danach wird jedes Partikel verkapselt, wobei vor der Verkapselung nicht-magnetisch bzw. elektrisch polarisierte Partikel, die wiederum z.B. eine andere Farbe aufweisen können, dazugegeben werden können.

Erfindungsgemäss werden die elektrisch und/oder magnetisch unterschiedlich polarisierten Partikel vor dem Versehen mit der ersten Beschichtung in wenigstens zwei Gruppen eingeteilt, wobei bei der ersten Gruppe die erste Beschichtung in Bezug auf die unterschiedlich polarisierten Seiten der Partikel gegenüberliegend der ersten Beschichtung der zweiten Gruppe aufgebracht wird. Selbstverständlich können vor der Verkapselung noch weitere Gruppen aufbereitet werden, bei denen die magnetisch und/oder elektrisch unterschiedlich polarisierten Partikel mit Beschichtungen mit anderen optischen Eigenschaften (z.B. Farben) versehen werden.

Zur Herstellung der Partikel selbst können magnetisch und/oder elektrisch polarisierte und/oder polarisierbare Körper (z.B. aus Celluloseacetat) in einer Flüssigkeit, insbesondere in einem flüssigem Polymer (z.B. Polypropylen) dispergiert werden. Danach wird die Flüssigkeit unter Einwirkung eines externen magnetischen und/oder elektrischen Feldes zu einer (dünnen) Folie geformt, beispielsweise durch Extrusion oder Kalandrieren. Durch das anliegende Feld werden die Körper polarisiert bzw. ausgerichtet. Danach wird die Folie, vorzugsweise bei immer noch anliegendem Feld, erstarrt. Die anliegenden Felder sind dabei vorzugsweise stärker als die oben beschriebenen "Auslesefelder", insbesondere z.B. im Bereich von 0.1 bis 5 Tesla bzw. 10 bis 10000 V/m. Die Folie ist vorzugsweise so dünn, dass möglichst nur eine "Schicht der Körper" in der Folie übereinander (d.h. in Richtung der Dicke der Folie) zu liegen kommt. Alternativ kann auch eine Schicht aus magnetisch und/oder elektrisch polarisierten und/oder polarisierbaren Körpern auf die bereits geformte Folie aufgebracht werden. Zur Erhöhung der Haftungsfähigkeit kann die Folienoberfläche dabei vorgängig z.B. mit Niederdruckplasma aktiviert werden. In einem nächsten Schritt wird mindestens eine erste Beschichtung, z.B. eine Farbe (z.B. Titanoxid oder Russ), auf eine Seite der Folie aufgebracht. Danach wird die Folie mit den Körpern zu Partikeln zerteilt (z.B. unter Kühlung mit flüssigem Stickstoff), welche dann zwei magnetisch und/oder elektrisch unterschiedlich polarisierte Seiten sowie eine Beschichtung aufweisen. Sodann können die so gewonnenen Partikel nach dem Fachmann bekannten Verfahren verkapselt werden.

Das Sicherheitselement bzw. dessen verkapselte Partikel können danach zum Beispiel im Siebdruckverfahren oder im Offsetdruckverfahren auf das Sicherheitsdokument aufgebracht werden. Hierbei wird das Siebdruckverfahren bevorzugt, da sich damit verkapselte Partikel grösseren Durchmessers drucken lassen. Der Einsatz anderer Druckverfahren ist ebenfalls denkbar. Auch können die verkapselten Partikel vor dem Druck in ein Bindemittel gegeben worden sein.

Vorzugsweise wird das erfindungsgemässe Sicherheitselement im Bereich eines in dem Sicherheitsdokument vorgesehen lichtdurchlässigen bzw. transparenten Fensters aufgebracht, z.B. an dessen Vorderseite und/oder Rückseite, sodass z.B. die Farbänderung(en) des Sicherheitselements bei Anlegen eines magnetischen oder elektrischen Feldes umso deutlicher optisch sichtbar sind. Damit wird die Fälschungssicherheit des Sicherheitsdokuments weiter erhöht.

### Kurze Beschreibung der Zeichnungen

Weitere vorteilhafte Ausgestaltungen der Erfindung ergeben sich aus den abhängigen Ansprüchen und den anhand der Zeichnungen nachfolgend dargestellten Ausführungsbeispielen. Es zeigen:
Fig. 1 eine schematische Darstellung eines verkapselten, mit Beschichtungen versehenen magnetisch unterschiedlich polarisierten Partikels einer ersten Gruppe von Partikeln eines erfindungsgemässen Sicherheitselements,
Fig. 2 eine schematische Darstellung eines verkapselten, mit Beschichtungen versehenen magnetisch unterschiedlich polarisierten Partikels einer zweiten Gruppe von Partikeln eines erfindungsgemässen Sicherheitselements,
Fig. 3 eine schematische Darstellung einer Verkapselung,
Fig. 4 eine schematische Darstellung der Herstellung eines ersten Bereichs eines erfindungsgemässen Sicherheitselements mit den in Figur 1 dargestellten verkapselten Partikeln,
Fig. 5 eine schematische Darstellung der Herstellung eines zweiten Bereichs eines erfindungsgemässen Sicherheitselements mit den in Figur 2 dargestellten verkapselten Partikeln,
Fig. 6 eine schematische Darstellung des Effekts des Anlegens eines magnetischen Feldes an ein erfindungsgemässes Sicherheitselement mit symbolisch hervorgehobenen verkapselten Partikeln der ersten und der zweiten Gruppe,
Fig. 7 die Darstellung der Figur 6 ohne symbolisch hervorgehobene verkapselte Partikel,
Fig. 8 eine schematische Darstellung einer weiteren Ausgestaltung eines verkapselten, mit Beschichtungen versehenen magnetisch und elektrisch unterschiedlich polarisierten Partikels einer ersten Gruppe von Partikeln eines erfindungsgemässen Sicherheitselements,
Fig. 9 eine schematische Darstellung einer weiteren Ausgestaltung eines verkapselten, mit Beschichtungen versehenen magnetisch und elektrisch unterschiedlich polarisierten Partikels einer zweiten Gruppe von Partikeln eines erfindungsgemässen Sicherheitselements,
Fig. 10 eine schematische Ansicht einer Verkapselung mit einer Mehrzahl von Partikeln,
Fig. 11 ein Sicherheitsdokument mit einem erfindungsgemässen Sicherheitselement ohne angelegtes Magnetfeld,
Fig. 12 das in Figur 11 dargestellte Sicherheitselement bei angelegtem Magnetfeld und
Fig. 13 das in den Figuren 11 und 12 dargestellte Sicherheitselement in einer Seitenansicht.

In den Figuren bezeichnen gleiche Bezugszeichen gleiche oder gleich wirkende Komponenten.

### Weg(e) zur Ausführung der Erfindung

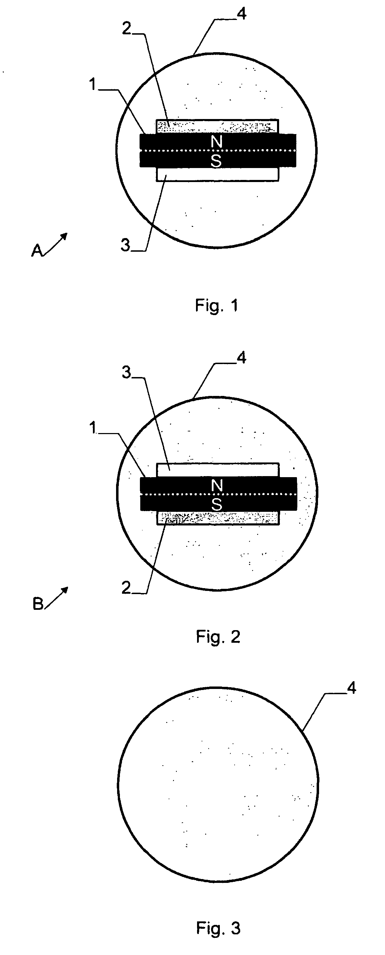

Figur 1 zeigt ein Partikel in der Form eines Plättchens 1, welches an seinen beiden ausgedehnten Seitenflächen unterschiedlich polarisiert ist, d.h. eine Seitenfläche ist als Nordpol ("N") und die andere Seitenfläche ist als Südpol ("S") ausgebildet. Auf einer Seitenfläche ist eine erste Beschichtung 2 aufgebracht, die zum Beispiel die Farbe Rot hat. In der Figur 1 ist die erste Beschichtung 2 auf der Oberseite (Nordpol-Seitenfläche) des Plättchens 1 aufgebracht, wobei sich der Ausdruck "Oberseite" und entsprechend der Ausdruck "Unterseite" auf die Darstellung in den Figuren beziehen. Auf die Unterseite des Plättchens 1 ist vorzugsweise eine zweite Beschichtung 3 aufgebracht, deren Farbe sich von der Farbe der ersten Beschichtung 2 unterscheidet. Beispielhaft ist die zweite Beschichtung 3 weiss. Das mit den Beschichtungen 2, 3 versehende Plättchen 1 ist frei beweglich in einem flüssigen Medium in einer Mikrokapsel 4 angeordnet. Die Dichte des Mediums entspricht dabei ungefähr der Dichte des Partikels. Das verkapselte, mit den Beschichtungen 2, 3 versehende Plättchen 1 gemäss Figur 1 wird im Folgenden als verkapseltes Partikel A bezeichnet. Das Sicherheitselement der Erfindung umfasst eine erste Gruppe verkapselter Partikel mit verkapselten Partikeln A.

Figur 2 zeigt ein verkapseltes Partikel B, das sich von dem verkapselten Partikel A der Figur 1 nur dadurch unterscheidet, dass die Beschichtungen 2, 3 miteinander vertauscht angeordnet sind. D.h. die erste Beschichtung 2 ist auf der Unterseite des Plättchens 1 angeordnet und die zweite Beschichtung 3 ist auf der Oberseite des Plättchens 1 angebracht, wobei Nordpol und Südpol wie bei dem Plättchen 1 des in Figur 1 dargestellten verkapselten Partikels A angeordnet sind. Das Sicherheitselement der Erfindung umfasst eine zweite Gruppe verkapselter Partikel mit verkapselten Partikeln B.

Figur 3 stellt eine Verkapselung 4 dar, wie sie bei den verkapselten Partikeln A und B der Figuren 1 und 2 eingesetzt wird. Die Verkapselung 4 kann zum Beispiel kugelförmig sein oder auch die Form eines Ellipsoids aufweisen. Sie ist mit einem gasförmigen oder flüssigen Medium gefüllt und weist eine nicht näher bezeichnete äussere Hülle auf, deren Wandstärke vorzugsweise zwischen 5% und 25% des Durchmessers des verkapselten Partikels A bzw. B beträgt.

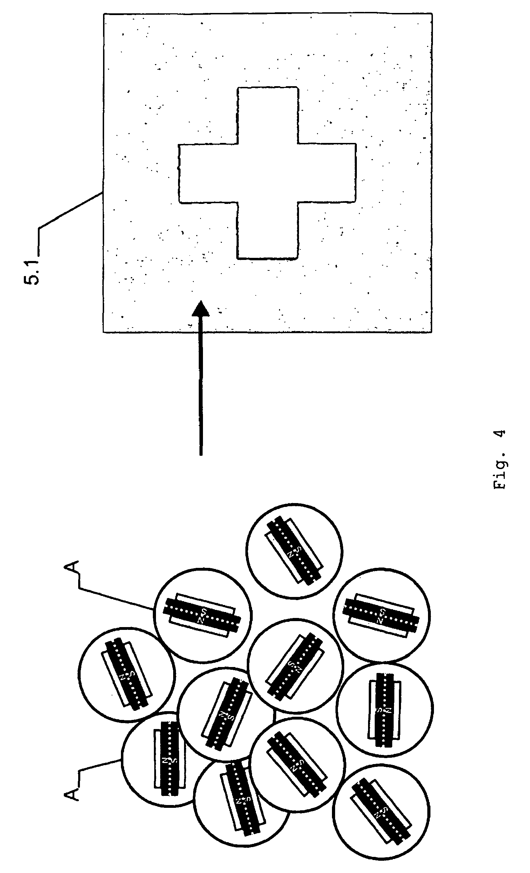

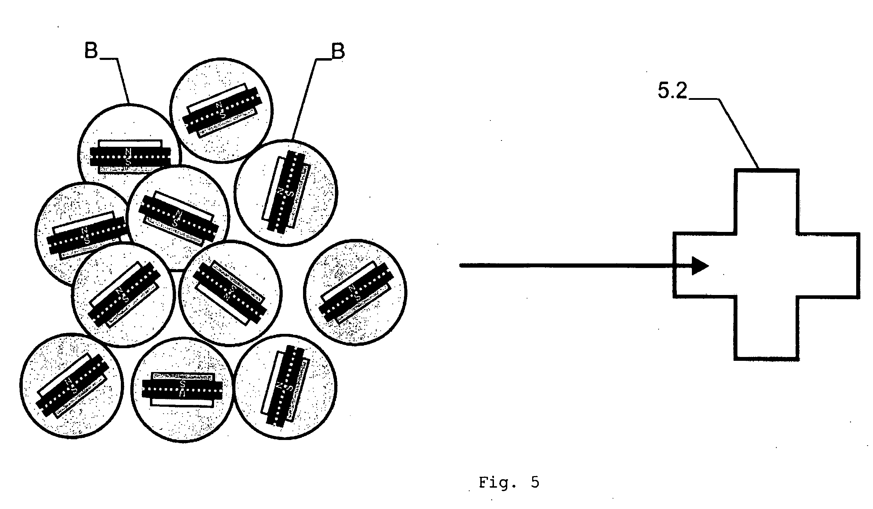

Figur 4 zeigt rechterhand einen ersten Bereich 5.1 eines Sicherheitselements 5, welches bei entsprechendem Anlegen eines magnetischen Feldes beispielhaft ein Schweizer Kreuz zeigen soll. Der erste Bereich 5.1 repräsentiert den "roten Bereich" des Schweizer Kreuzes. Die Begriffe "rechterhand" und "linkerhand" beziehen sich wieder auf die Darstellung in den Zeichnungen, von der Perspektive des Betrachters ausgehend. Linkerhand ist eine erste Gruppe von verkapselten Partikeln bestehend aus den verkapselten Partikeln A gezeigt. Durch entsprechende Druckverfahren, insbesondere Siebdruck, wird die erste Gruppe bzw. werden die verkapselten Partikel A auf ein nicht dargestelltes Sicherheitsdokument aufgebracht, um einen ersten Bereich 5.1 eines Sicherheitselements (grau dargestellt) zu bilden. Bei Anlegen eines magnetischen Feldes entsprechender Ausrichtung drehen sich die mit den Beschichtungen 2, 3 versehenden Plättchen 1 der verkapselten Partikel A so, dass die rote, erste Beschichtung 2 nach oben, vom Sicherheitsdokument weg zeigt, und somit für den Betrachter sichtbar wird. Beim Druck wird in diesem Beispiel das weisse Kreuz (der Bereich 5.2, vgl. Figur 5) ausgespart, d.h. nicht mit verkapselten Partikeln A versehen, da hier bei Anlegen eines magnetischen Feldes keine Rotfärbung gewünscht ist. Der Pfeil der Figur 4 repräsentiert den Druckvorgang.

Figur 5 zeigt rechterhand einen zweiten Bereich 5.2 des Sicherheitselements 5, der dem Bereich entspricht, der in diesem Beispiel bei Anlegen eines magnetischen Feldes das weisse Kreuz des Schweizer Kreuzes zeigt. Dieser zweite Bereich 5.2 (und nur dieser) wird mit verkapselten Partikeln B der zweiten Gruppe, ebenfalls vorzugsweise im Siebdruckverfahren, bedruckt. Beim Anlegen eines magnetischen Feldes in der gleichen Richtung/Ausrichtung wie bei Figur 4 drehen sich die mit den Beschichtungen 2, 3 versehenen Plättchen der verkapselten Partikel B nun derart, dass die weisse, zweite Beschichtung 3 nach oben, vom Sicherheitsdokument weg zeigt, und somit für den Betrachter sichtbar wird. Dies ergibt sich daraus, dass beim verkapselten Partikel B die Beschichtungen 2, 3 gegenüber den Beschichtungen der verkapselten Partikel A vertauscht angeordnet sind. Der in Figur 4 dargestellte Bereich 5.1 wird nicht mit den verkapselten Partikeln B bedruckt. Auch in Figur 5 kennzeichnet der Pfeil den Druckvorgang.

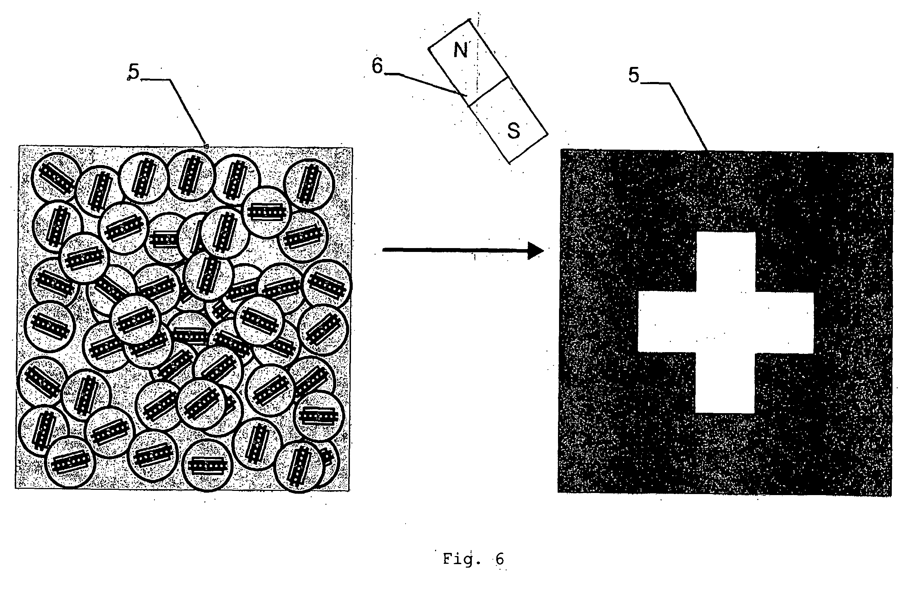

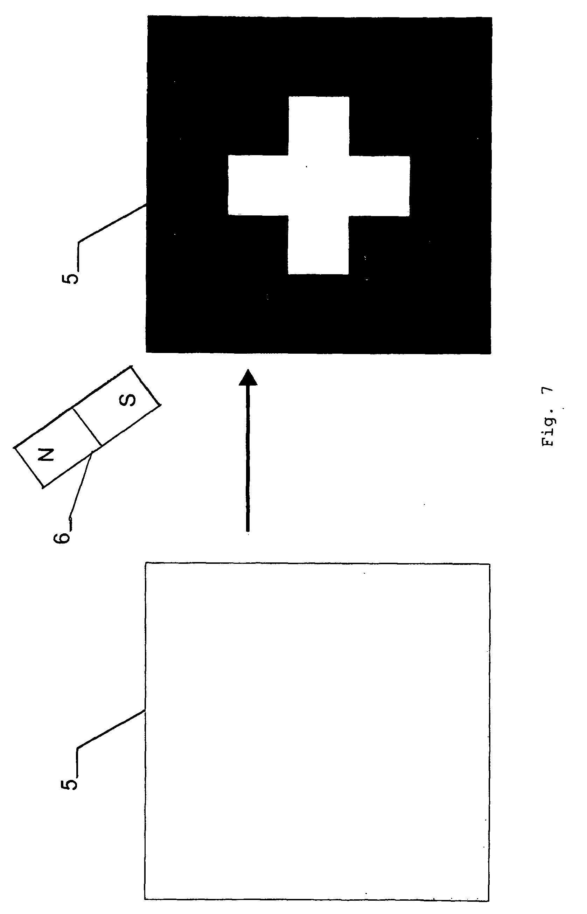

In den Figuren 6 und 7 ist jeweils linkerhand das Sicherheitselement 5 ohne angelegtes magnetisches Feld dargestellt, wobei in Figur 6 zusätzlich symbolisch die verkapselten Partikel A, B des Sicherheitselements 5 gezeigt sind. Nach Anlegen eines - vorzugsweise externen - magnetischen Feldes entsprechender Richtung drehen sich die Plättchen 1 der verkapselten Partikel A, B derart, dass sich wie oben in Bezug auf die Figuren 4 und 5 bereits angedeutet gemäss diesem Beispiel der Bereich 5.1 des Sicherheitselements 5 rot darstellt und der Bereich 5.2 des Sicherheitselements 5 weiss darstellt, sodass sich das Schweizer Kreuz ergibt, welches vor Anlegen des magnetischen Feldes nicht sichtbar war, da die Beschichtungen zufällig orientiert waren. Das vorzugsweise externe magnetische Feld ist beispielhaft durch einen Magneten 6 dargestellt, dessen Südpol von oben kommend näher zu den Plättchen 1 angeordnet ist als dessen Nordpol, sodass sich die in den Figuren 1 und 2 dargestellten Plättchen 1, bei denen der Nordpol oben und der Südpol unten vorgesehen ist, im Wesentlichen waagerecht ausrichten, um das Schweizer Kreuz zu generieren. Ein Vertauschen der Polarität des Magnets führt - wie für den Fachmann offensichtlich - zu einer Inversion des Schweizer Kreuzes.

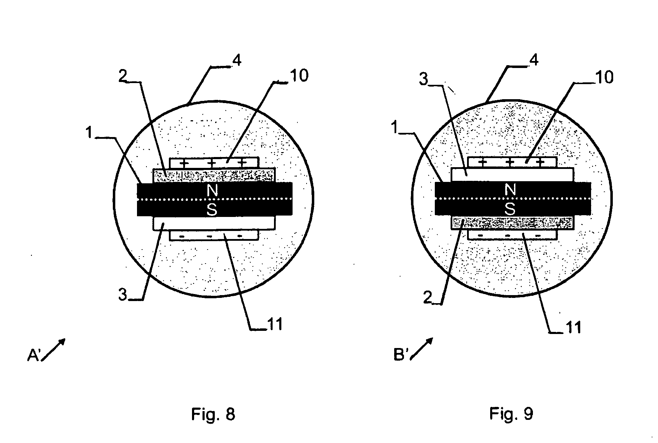

Die Figuren 8 und 9 zeigen verkapselte Partikel A' und B' mit einer alternative Ausgestaltung des Plättchens 1'. Bei dem Plättchen 1' sind Nordpol und Südpol gegenüberliegend an den als ausgedehnte Flächen ausgebildeten Seiten des Plättchens 1' vorgesehen. Die Beschichtungen 2, 3 sind entsprechend auf dem Nordpol bzw. auf dem Südpol angeordnet. So ist bei dem verkapselten Partikel A' die erste Beschichtung 2 auf den Nordpol aufgebracht, während bei dem verkapselten Partikel B' die erste Beschichtung 2 auf den Südpol aufgebracht ist. Entsprechend ist bei dem verkapselten Partikel A' die zweite Beschichtung 3 auf dem Südpol aufgebracht, während bei dem verkapselten Partikel B' die zweite Beschichtung 3 auf dem Nordpol aufgebracht. Neben dem magnetisch polarisierten Nord- und Südpol sind an den Beschichtungen 2 und 3 noch elektrisch polarisierte Bereiche 10 (elektrisch positiv polarisiert, "+") und 11 (elektrisch negativ polarisiert, "-") angeordnet. Somit ist auch durch ein Anlegen eines elektrischen Feldes eine Ausrichtung der Plättchen und somit eine Orientierung der Beschichtungen 2, 3 möglich.

Mit den verkapselten Partikeln A' und B' lässt sich unter anderem ein magnetischer und/oder elektrischer Jalousieeffekt erzielen, wenn die Partikel als Plättchen im oben definierten Sinn ausgestaltet und optisch nicht transparent sind. Unter einem nicht transparenten Partikel ist dabei ein Partikel zu verstehen, das höchstens 80%, insbesondere höchstens 50% des senkrecht zur ausgedehnten Fläche des Plättchens einfallenden Lichts bei mindestens einer Wellenlänge im Bereich 10 µm bis 400 nm, insbesondere 800 nm bis 400 nm, transmittiert. Wird z.B. bei einem Sicherheitselement, welches die verkapselten Partikel A' und B' enthält, ein Magnet mit einem seiner Pole seitlich der verkapselten Partikel angeordnet, so drehen sich die Plättchen in eine senkrechte Stellung und erlauben dem Betrachter - wie bei einer Jalousie in geöffneter Stellung - bei optisch transparentem Medium zwischen den Plättchen hindurchzusehen.

Ein entsprechender Effekt kann selbstverständlich auch mit den in den Figuren 1 und 2 dargestellten verkapselten Partikel A, B bei entsprechender Anordnung des Magneten erzielt werden. Entsprechend können mit den verkapselten Partikeln A', B' flächige Muster wie das Schweizer Kreuz durch entsprechende Ausrichtung des Magnetfeldes dargestellt werden.

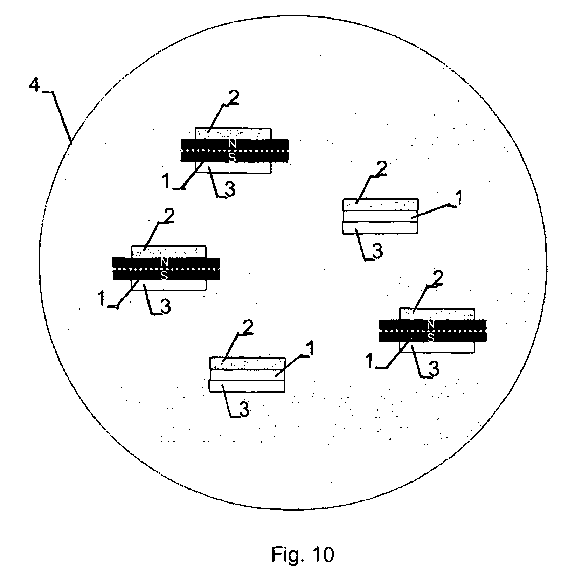

Die Figur 10 zeigt eine schematische Ansicht einer Verkapselung 4 mit einer Mehrzahl von Partikeln. Dabei sind verschiedene Partikel in einer einzigen Verkapselung 4 angeordnet, nämlich drei magnetisch polarisierte Plättchen aus Figur 1 und zusätzlich zwei elektrisch und magnetisch nicht polarisierte Plättchen, welche nur die Beschichtungen 2 und 3 aufweisen. Die letztgenannten Plättchen führen dann zu einer "Hintergrundfarbe", da ihre zufällige bzw. gleichverteilte Orientierung durch Anlegen eines Magnetfelds nicht beeinflussbar ist.

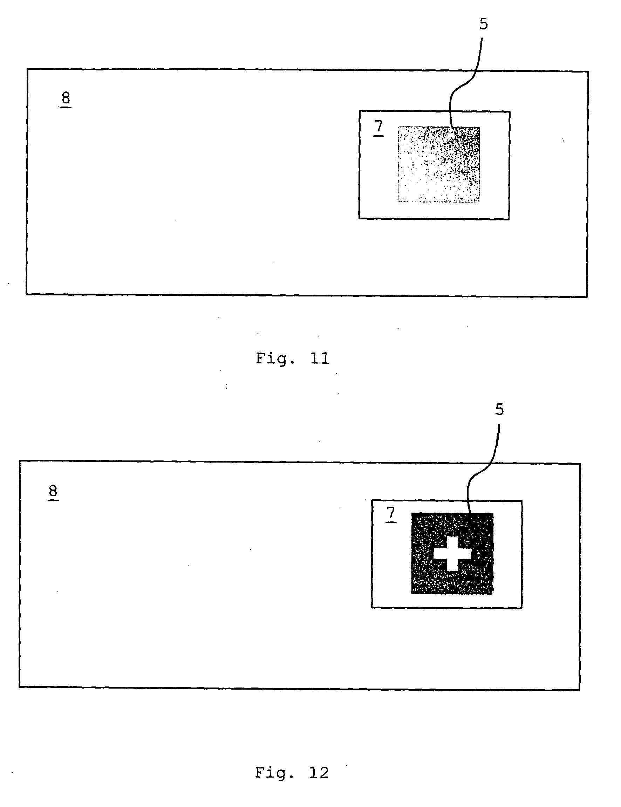

Der oben beschriebene "Jalousieeffekt" ist besonders auffällig, wenn das Sicherheitselement 5 im Bereich eines Fensters 7 eines Sicherheitsdokuments 8 angeordnet ist. Die Figuren 11, 12 und 13 zeigen ein Sicherheitsdokument 8 mit einem Fenster 7, in welchem das in den Figuren 4-7 dargestellte Sicherheitselement 5 angeordnet ist. Figur 11 zeigt das Sicherheitsdokument 8 ohne dass ein magnetisches Feld zum Überprüfen der Echtheit des Sicherheitsdokuments 8 angelegt ist.

Figur 12 zeigt das gleiche Sicherheitsdokument 8 wie Figur 11, allerdings ist nun ein (nicht dargestelltes) magnetisches Feld angelegt, welches zur Ausrichtung der verkapselten Partikel A, B des Sicherheitselements 5 führt, sodass das beispielhaft gewählte Schweizer Kreuz erkennbar wird. Die Erkennbarkeit des Musters, welches das Sicherheitselement 5 bei angelegtem magnetischen Feld (und nur dann) für jeden visuell sichtbar zeigen soll, beweist die Echtheit des Sicherheitsdokuments 8.

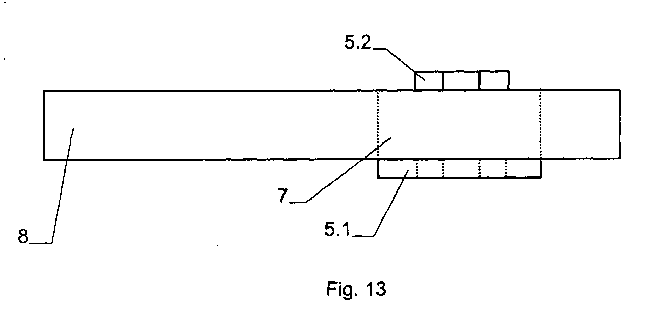

Die Figur 13 zeigt das Sicherheitsdokument 8 aus den Figuren 11 und 12 in einer Seitenansicht. Dabei sind die Druckbereiche 5.1 und 5.2 aus den Figuren 4 und 5 auf unterschiedlichen Seiten des Fensters 7 erkenntlich.

In einer anderen - nicht gezeigten - Ausführungsform können die Druckbereiche 5.1 und 5.2 zwischen oder in Folien eines Fensters 7 angeordnet sein.

Selbstverständlich können die Beschichtungen 2, 3 auch Farben aus dem nicht für Menschen sichtbaren Bereich umfassen, zum Beispiel Farben, die nur bei Bestrahlung mit ultraviolettem oder Infrarot-Licht sichtbar werden. Neben dem Magneten sind für die Echtheitsprüfung dann noch zusätzliche entsprechende Bestrahlungseinrichtungen erforderlich wie Infrarot-Lampen bzw. Lichtquellen, die ultraviolettes Licht ausstrahlen. Andere optische Eigenschaften wie z.B. Fluoreszenz, Phosphoreszenz oder Spiegelung sind wie oben erwähnt ebenfalls möglich.

Statt eines externen Magneten kann für die Echtheitsprüfung selbstverständlich auch ein in dem Sicherheitsdokument selbst angeordneter Magnet, zum Beispiel eine magnetische Beschichtung eingesetzt werden, die beispielsweise durch Falten des Sicherheitsdokuments auf das Sicherheitselement aufgebracht wird. Auf der gegenüberliegenden Seite des Sicherheitsdokuments wäre dann nach dem Falten das vorher nicht erkennbare Muster des Sicherheitselements erkennbar.

Die obigen Ausführungen gelten gleichermassen für Sicherheitselemente mit elektrisch unterschiedlich polarisierten Partikel, deren Position und/oder Orientierung von einem angelegten elektrischen Feld abhängen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Sicherheitselement für ein Sicherheitsdokument (8),
wobei das Sicherheitselement (5, 5.1, 5.2) eine Vielzahl von Partikeln (1; 1') umfasst, die jeweils beweglich in einer Vielzahl von Verkapselungen (4) angeordnet sind,
wobei jeweils eine erste und eine zweite Seite eines Partikels (1; 1') magnetisch und/oder elektrisch unterschiedlich polarisiert sind,
**dadurch gekennzeichnet, dass** die erste oder zweite Seite oder eine weitere Seite des Partikels (1') mit einer ersten Beschichtung (2) versehen ist,
dass wenigstens zwei Gruppen von verkapselten Partikeln (A, B; A', B') vorgesehen sind,
dass bei der ersten Gruppe von verkapselten Partikeln (A; A') die erste Beschichtung (2) in Bezug auf die magnetisch und/oder elektrisch unterschiedlich polarisierten ersten und zweiten Seiten gegenüberliegend der ersten Beschichtung (2) der zweiten Gruppe von verkapselten Partikeln (B, B') angeordnet ist, und
dass die erste Gruppe und die zweite Gruppe von verkapselten Partikeln (A, A', B, B') so ausgestaltet sind, dass sich mittels eines elektrischen Feldes und/oder Magnetfeldes vordefinierte Muster erzeugen lassen.

2. Sicherheitselement nach Anspruch 1 wobei es sich bei den Verkapselungen der Partikel (1; 1') um Mikroverkapselungen handelt, wobei ein Durchmesser der Mikroverkapselungen insbesondere weniger als 25 µm beträgt.

3. Sicherheitselement nach einem der vorangehenden Ansprüche wobei die Verkapselungen (4) mindestens für eine optische Wellenlänge transparent ausgestaltet sind.

4. Sicherheitselement nach einem der vorangehenden Ansprüche wobei in den Verkapselungen (4) ein Medium angeordnet ist, wobei eine Dichte des Mediums insbesondere weniger als ±50% von einer Dichte des oder der Partikel (1; 1') in den Verkapselungen (4) abweicht.

5. Sicherheitselement nach einem der vorangehenden Ansprüche, wobei die erste Beschichtung (2) mindestens eine der optischen Eigenschaften aus der Gruppe von Fluoreszenz und Phosphoreszenz aufweist.

6. Sicherheitselement nach einem der vorangehenden Ansprüche, **dadurch gekennzeichnet, dass** mindestens ein Teil der Partikel als Plättchen (1; 1') ausgeführt ist und insbesondere wobei die erste Beschichtung (2) auf einer als ausgedehnte Fläche ausgebildeten Seite des Plättchens (1; 1') aufgebracht ist.

7. Sicherheitselement nach Anspruch 6, **dadurch gekennzeichnet, dass** die magnetisch und/oder elektrisch unterschiedlich polarisierten ersten und zweiten Seiten eines Partikels (1') den ausgedehnten Flächen des Plättchens (1') entsprechen.

8. Sicherheitselement nach Anspruch 6, **dadurch gekennzeichnet, dass** die unterschiedlich polarisierten ersten und zweiten Seiten eines Partikels (1) an einander gegenüberliegenden Seiten und senkrecht zu den ausgedehnten Flächen des Plättchens (1) angeordnet sind.

9. Sicherheitselement nach einem der vorangehenden Ansprüche, wobei die Partikel (1) nicht transparent sind.

10. Sicherheitselement nach einem der vorangehenden Ansprüche, **dadurch gekennzeichnet, dass** gegenüberliegend der ersten Beschichtung (2) an jedem Partikel (1; 1') eine zweite Beschichtung (3) angeordnet ist, und insbesondere wobei sich optische Eigenschaften der zweiten Beschichtung von optischen Eigenschaften der ersten Beschichtung (2) unterscheiden.

11. Sicherheitselement nach einem der vorhergehenden Ansprüche wobei jedes Partikel (1; 1') zusätzlich zu der ersten Beschichtung (2) und gegebenenfalls der zweiten Beschichtung (3) eine von der ersten und/oder zweiten Beschichtung unterschiedliche optische Eigenschaft aufweist.

12. Sicherheitselement nach einem der vorhergehenden Ansprüche wobei zusätzlich zu den magnetisch und/oder elektrisch unterschiedlich polarisierten Partikeln (1; 1') in jeder Verkapselung mindestens ein nicht-magnetisch bzw. elektrisch polarisiertes Partikel vorgesehen ist, und insbesondere wobei dieses nicht-magnetisch bzw. elektrisch polarisierte Partikel eine von den polarisierten Partikeln abweichende optische Eigenschaft aufweist.

13. Sicherheitsdokument **gekennzeichnet durch** ein Sicherheitselement (5, 5.1, 5.2) nach einem der vorhergehenden Ansprüche.

14. Sicherheitsdokument nach Anspruch 13, **dadurch gekennzeichnet, dass** das Sicherheitsdokument (8) ein Fenster (7) aufweist, wobei das Sicherheitselement (5, 5.1, 5.2) im Bereich des Fensters (7) angeordnet ist.

15. Verfahren zur Herstellung eines Sicherheitselements (5, 5.1, 5.2) nach einem der Ansprüche 1 bis 12, **gekennzeichnet durch** folgende Schritte:
- Versehen von Partikeln (1; 1'), die zwei magnetisch und/oder elektrisch unterschiedlich polarisierte Seiten aufweisen, mit einer ersten Beschichtung (2) und
- Verkapselung der mit der ersten Beschichtung (2) versehenen Partikel (1; 1'),
wobei vor der Verkapselung die Partikel (1, 1') in wenigstens zwei Gruppen eingeteilt werden, wobei bei der ersten Gruppe die erste Beschichtung (2) in Bezug auf die unterschiedlich polarisierten Seiten gegenüberliegend der ersten Beschichtung (2) der zweiten Gruppe aufgebracht wird.

16. Verfahren nach Anspruch 15, **dadurch gekennzeichnet, dass** bei jedem Partikel (1; 1') vor der Verkapselung gegenüberliegend der ersten Beschichtung (2) eine zweite Beschichtung (3) aufgebracht wird, deren optische Eigenschaften sich von der ersten Beschichtung (2) unterscheiden.

17. Verfahren nach einem der Ansprüche 15 oder 16, weiterhin umfassend die folgenden Schritte
- Dispergieren magnetisch und/oder elektrisch polarisierter oder polarisierbarer Körper in einer Flüssigkeit, insbesondere flüssigem Polymer,
- Formen der Flüssigkeit zu einer Folie in einem magnetischen und/oder elektrischen Feld, insbesondere mittels Extrusion oder Kalandrieren,
- Aufbringen mindestens einer ersten Beschichtung auf eine Seite der Folie,
- Zerteilen der Folie zu Partikeln (1; 1'), die zwei magnetisch und/oder elektrisch unterschiedlich polarisierte Seiten sowie eine Beschichtung aufweisen.

18. Verfahren zur Prüfung der Echtheit eines Sicherheitsdokuments (8) nach einem der Ansprüche 13 oder 14, **dadurch gekennzeichnet, dass** zumindest das Sicherheitselement (5, 5.1, 5.2) des Sicherheitsdokuments (8) einem elektrischen und/oder einem magnetischen Feld ausgesetzt wird.

## Claims

1. Security element for a security document (8),
wherein the security element (5, 5.1, 5.2) comprises a plurality of particles (1; 1') which are movably arranged in a plurality of capsules (4),
wherein a first and a second side of a particle (1; 1') are magnetically and/or electrically polarized in different ways,
**characterized in that** the first or the second side or a further side of the particle (1') is provided with a first coating (2),
**in that** at least two groups of capsuled particles (A, B; A', B') are provided,
**in that** in case of the first group of capsuled particles (A; A') the first coating (2) is arranged opposite of the first coating (2) of the second group of capsuled particles (B, B') with respect to the first and the second sides which are magnetically and/or electrically polarized in different ways, and
**in that** the first group and the second group of capsuled particles (A, A', B, B') are adapted in such a way that predefined patterns can be generated by means of an electric field and/or a magnetic field.

2. Security element according to claim 1, wherein the capsules of the particles (1; 1') are micro-capsules, wherein a diameter of the micro-capsules is particularly below 25 µm.

3. Security element according to one of the preceding claims, wherein the capsules (4) are adapted to be transparent for at least one optical wavelength.

4. Security element according to one of the preceding claims, wherein a medium is arranged in the capsules (4), wherein a density of the medium deviates from a density of the particle or particles (1; 1') in the capsules (4) particularly by less than ±50%.

5. Security element according to one of the preceding claims, wherein the first coating (2) has at least one of the optical properties of the group of fluorescence and phosphorescence.

6. Security element according to one of the preceding claims, **characterized in that** at least a part of the particles are executed as platelets (1; 1') and particularly wherein the first coating (2) is applied on a side of the platelet (1; 1') which is formed as elongated surface.

7. Security element according to claim 6, **characterized in that** the first and the second sides of a particle (1'), which are magnetically and/or electrically polarized, correspond to the elongated surfaces of the platelet (1').

8. Security element according to claim 6, **characterized in that** the first and the second differently polarized sides of a particle (1) are opposed to one another and arranged perpendicularly on the elongated surfaces of the platelet (1).

9. Security element according to one of the preceding claims, wherein the particles (1) are not transparent.

10. Security element according to one of the preceding claims, **characterized in that** a second coating (3) is arranged opposed to the first coating (2) on each particle (1; 1'), and particularly wherein optical properties of the second coating are different from optical properties of the first coating (2).

11. Security element according to one of the preceding claims, wherein, additionally to the first coating (2) and potentially the second coating (3), each particle (1; 1') has an optical property which differs from the first and/or the second coating.

12. Security element according to one of the preceding claims, wherein, additionally to the magnetically and/or optically differently polarized particles (1; 1'), at least a particle which is not magnetically and/or electrically polarized is provided, and particularly wherein this particle which is not magnetically and/or electrically polarized has an optical property which differs from the polarized particles.

13. Security document **characterized by** a security element (5, 5.1, 5.2) according to one of the preceding claims.

14. Security document according to claim 13, **characterized in that** the security document (8) has a window (7), wherein the security element (5, 5.1, 5.2) is arranged in the vicinity of the window (7).

15. Method for manufacturing a security element (5, 5.1, 5.2) according to one of the claims 1 to 12, **characterized by** the following steps:
- coating particles (1; 1'), having two sides which are magnetically and/or electrically polarized, with a first coating (2) and
- encapsulating the particles (1; 1') with the first coating (2),
wherein the particles (1, 1') are distributed in at least two groups before encapsulating, wherein in case of the first group the first coating (2) is applied opposite of the first coating (2) of the second group with respect to the sides which are polarized in different ways.

16. Method according to claim 15, **characterized in that** each particle is provided with a second coating (3) opposed to the first coating (2) before encapsulation, the optical properties of which are different from the first coating (2).

17. Method according to one of the claims 15 or 16, further comprising the following steps
- dispersing magnetically and/or electrically polarized or polarizable bodies in a liquid, particularly liquid polymer,
- forming the liquid to a foil in a magnetic and/or electric field, particularly by means of extrusion or calendering,
- applying at least a first coating on one side of the foil,
- splitting the foil in particles (1; 1') having two sides which are differently polarized in a magnetic and/or electric way, and a coating.

18. Method for verifying the authenticity of a security document (8) according to one of the claims 13 or 14, **characterized in that** at least the security element (5, 5.1, 5.2) of the security document (8) is exposed to an electric and/or magnetic field.

## Revendications

1. Elément de sécurité pour un document de sécurité (8),
l'élément de sécurité (5, 5.1, 5.2) comprenant une pluralité de particules (1; 1') arrangées de manière amovible dans une pluralité de capsules (4),
un premier et un deuxième côté d'une particule (1; 1') étant polarisés magnétiquement et/ou électriquement de manière différente,
**caractérisé en ce que** le premier ou le deuxième côté ou un autre côté de la particule (1') est prévu avec un premier revêtement (2),
**en ce qu'**au moins deux groupes de particules (A, B; A', B') sont prévus,
**en ce qu'**en cas du premier groupe de particules capsulées (A; A') le premier revêtement (2) est arrangé de manière opposée par rapport au premier revêtement (2) du deuxième groupe de particules capsulées (B, B'), par rapport au premier et au deuxième côté qui sont polarisés magnétiquement et/ou électriquement de manière différente, et
**en ce que** le premier groupe et le deuxième groupe de particules capsulées (A, A', B, B') sont formés de sorte que des motifs prédéfinis puissent être générés à l'aide un champ électrique et/ou magnétique.

2. Elément de sécurité selon la revendication 1, les capsules des particules (1; 1') étant des microcapsules, un diamètre des microcapsules étant particulièrement inférieur à 25 µm.

3. Elément de sécurité selon l'une des revendications précédentes, les capsules (4) étant adaptées à être transparentes pour au moins une longueur d'onde optique.

4. Elément de sécurité selon l'une des revendications précédentes, un médium étant arrangé dans les capsules (4), une densité du médium déviant d'une densité de la particule ou des particules (1; 1') dans les capsules particulièrement par moins de ±50%.

5. Elément de sécurité selon l'une des revendications précédentes, le premier revêtement (2) ayant au moins une des propriétés optiques du groupe de fluorescence et phosphorescence.

6. Elément de sécurité selon l'une des revendications précédentes, **caractérisé en ce qu'**au moins une partie des particules sont exécutées comme des plaquettes (1; 1') et particulièrement le premier revêtement (2) étant appliqué sur un côté de la plaquette (1; 1') formé comme surface oblongue.

7. Elément de sécurité selon la revendication 6, **caractérisé en ce que** le premier et le deuxième côté d'une particule (1'), qui sont polarisés magnétiquement et/ou électriquement de manière différente, correspondent à la surface oblongue de la plaquette (1').

8. Elément de sécurité selon la revendication 6, **caractérisé en ce que** le premier et le deuxième côté d'une particule (1), qui sont polarisés de manière différente, sont opposés l'un par rapport à l'autre et arrangés perpendiculairement sur la surface oblongue de la plaquette (1).

9. Elément de sécurité selon l'une des revendications précédentes, les particules (1) étant non-transparentes.

10. Elément de sécurité selon l'une des revendications précédentes, **caractérisé en ce qu'**un deuxième revêtement (3) est arrangé de manière opposée par rapport au premier revêtement (2) sur chaque particule (1; l'), et particulièrement des propriétés optiques du deuxième revêtement étant différentes par rapport à des propriétés optiques du premier revêtement (2) .

11. Elément de sécurité selon l'une des revendications précédentes, en plus du premier revêtement (2) et potentiellement du deuxième revêtement (3), chaque particule (1; 1') ayant une propriété optique qui diffère du premier et/ou deuxième revêtement.

12. Elément de sécurité selon l'une des revendications précédentes, en plus des particules polarisées magnétiquement et/ou électriquement de manière différente, au moins une particule qui n'est pas polarisée magnétiquement et/ou électriquement de manière différente étant prévue, et particulièrement cette particule qui n'est pas polarisée magnétiquement et/ou électriquement de manière différente ayant une propriété optique qui diffère des particules polarisées.

13. Document de sécurité **caractérisé par** un élément de sécurité (5, 5.1, 5.2) selon l'une des revendications précédentes.

14. Document de sécurité selon la revendication 13, **caractérisé en ce que** le document de sécurité (8) a une fenêtre (7), l'élément de sécurité (5, 5.1, 5.2) étant arrangé dans la région de la fenêtre (7).

15. Procédé de fabrication d'un élément de sécurité (5, 5.1, 5.2) selon l'une des revendications 1 à 12, **caractérisé par** les étapes suivantes:
- appliquer un premier revêtement (2) aux particules (1; 1') ayant deux côtés qui sont polarisés magnétiquement et/ou électriquement et
- capsuler les particules (1; 1') avec le premier revêtement (2),
les particules (1, 1') étant distribuées en au moins deux groupes avant les capsuler, dans le cas du premier groupe le premier revêtement (2) étant appliqué opposé du premier revêtement (2) du deuxième groupe par rapport aux côtés polarisés magnétiquement et/ou électriquement de manière différente.

16. Procédé selon la revendication 15, **caractérisé en ce que** chaque particule est dotée d'un deuxième revêtement (3) opposé au premier revêtement (2) avant la capsuler, les propriétés optiques duquel étant différentes du premier revêtement (2).

17. Procédé selon l'une des revendications 15 ou 16, comprenant en outre les étapes suivantes
- disperser des corps polarisés ou polarisables magnétiquement et/ou électriquement dans un liquide, particulièrement du polymère liquide,
- former le liquide comme feuille dans un champ magnétique et/ou électrique, particulièrement par extrusion ou calandrage,
- appliquer au moins un premier revêtement sur un côté de la feuille,
- diviser la feuille en particules (1; 1') ayant deux côtés qui sont polarisés magnétiquement et/ou électriquement de manière différente et un revêtement.

18. Procédé pour vérifier l'authenticité d'un document de sécurité (8) selon l'une des revendications 13 ou 14, **caractérisé en ce qu'**au moins l'élément de sécurité (5, 5.1, 5.2) du document de sécurité (8) est exposé à un champ électrique et/ou magnétique.
